# EUROPÄISCHE PATENTSCHRIFT

(11) **EP 3 992 445 B1**
(45) Veröffentlichungstag und Bekanntmachung des Hinweises auf die Patenterteilung: **10.09.2025**
(21) Anmeldenummer: 20205168.6
(22) Anmeldetag: 02.11.2020
(51) Int. Cl.: F02D 41/34

(54) **VERFAHREN ZUM BETRIEB EINES ZWEITAKTMOTORS**
METHOD FOR OPERATING A TWO STROKE ENGINE
PROCÉDÉ DE FONCTIONNEMENT D'UN MOTEUR À DEUX TEMPS

(43) Veröffentlichungstag der Anmeldung: 04.05.2022
(73) Patentinhaber: Andreas Stihl AG & Co. KG, 71336 Waiblingen (DE)
(72) Erfinder: GEYER, Klaus, 71560 Sulzbach (DE); ALBER, Johannes, 70190 Stuttgart (DE); RENZ, Johann-Sebastian, 72810 Gomaringen (DE)
(74) Vertreter: Reinhardt, Annette

(56) Entgegenhaltungen:
- DE-A1- 102005 002 273
- DE-A1- 102005 002 275
- DE-A1- 19 628 740
- DE-B4- 102005 002 273
- US-A- 4 901 701

## Beschreibung

Die Erfindung betrifft ein Verfahren zum Betrieb eines Zweitaktmotors der im Oberbegriff des Anspruchs 1 angegebenen Gattung.

Es ist bekannt, Zweitaktmotoren den für den Betrieb benötigten Kraftstoff über ein elektromagnetisches Kraftstoffventil zuzudosieren. Der Kraftstoff wird dabei üblicherweise für jeden Motorzyklus zudosiert. Dabei wird das Kraftstoffventil innerhalb eines Motorzyklus einmal geöffnet und einmal geschlossen. Dadurch ergeben sich insbesondere bei Volllast wie beispielsweise bei Nenndrehzahl oder in der Enddrehzahl sehr kurze Schaltzeiten. Um diese realisieren zu können, muss ein recht aufwändig gestaltetes elektromagnetisches Ventil mit hohem Energiebedarf zum Einsatz kommen.

Um diese sehr kurzen Schaltzeiten bei hohen Drehzahlen zu vermeiden, ist es aus der DE 10 2013 012 135 A1 bekannt, das Kraftstoffventil im Leerlauf mit einer Frequenz zu öffnen, die auf das Öffnen und Schließen des Ansaugkanals abgestimmt ist. Die Kraftstoffzufuhr im Leerlauf erfolgt daher synchron zu den Motorzyklen. In Volllast ist vorgesehen, das elektromagnetische Ventil unabhängig von der Frequenz, mit der der Ansaugkanal mit dem Kurbelgehäuseinnenraum verbunden wird, also unabhängig von den Motorzyklen, zu öffnen. Dadurch muss das Kraftstoffventil bei Volllast nicht bei jedem Motorzyklus geöffnet und geschlossen werden, sondern kann seltener geöffnet und geschlossen werden, wodurch der Einsatz eines einfacher aufgebauten Ventils möglich wird.

Es hat sich gezeigt, dass die Umschaltung der Betriebsweise des Kraftstoffventils von einem zu den Motorzyklen synchronen Betrieb zu einem zu den Motorzyklen asynchronen Betrieb bei ungünstiger Wahl des Umschaltzeitpunkts vom Bediener wahrnehmbar ist. Dies ist unerwünscht.

Die DE 10 2005 002 275 A1 und die DE 10 2005 002 273 A1 offenbaren Verfahren zum Betrieb von Verbrennungsmotoren, bei denen die je Umdrehung der Kurbelwelle zuzuführende Kraftstoffmenge ermittelt wird. Dabei wird nicht bei jeder Umdrehung der Kurbelwelle Kraftstoff zugeführt.

Die US 4,901,701 A offenbart einen Verbrennungsmotor, bei dem die je Umdrehung der Kurbelwelle einzuspritzende Kraftstoffmenge anhand eines Standardwerts und der Messwerte unterschiedlicher Sensoren ermittelt wird.

Die DE 196 28 740 A1 offenbart ein Verfahren zur Steuerung der Kraftstoffeinspritzung bei einem Zweitaktmotor, bei dem Einspritzmenge und Einspritzzeitpunkt kurbelwellensynchronisiert gesteuert werden.

Der vorliegenden Erfindung liegt die Aufgabe zugrunde, ein Verfahren zum Betrieb eines Zweitaktmotors bereitzustellen, das für alle Betriebszustände des Verbrennungsmotors mit Ausnahme des Anwerfvorgangs anwendbar ist und den Einsatz eines einfach aufgebauten Ventils ermöglicht.

Diese Aufgabe wird durch ein Verfahren zum Betrieb eines Zweitaktmotors mit den Merkmalen des Anspruchs 1 gelöst.

Erfindungsgemäß ist vorgesehen, mehrere aufeinander folgende Umdrehungen der Kurbelwelle zu einem Block zusammenzufassen und die Ansteuerung des Kraftstoffventils zumindest in einem quasistationären Zustand des Zweitaktmotors bezogen auf unterbrechungsfrei aufeinander folgende Blöcke von Umdrehungen der Kurbelwelle durchzuführen. Innerhalb jedes Blocks von Umdrehungen der Kurbelwelle wird das Kraftstoffventil zumindest in dem quasistationären Zustand genau einmal geöffnet und genau einmal geschlossen. Jeder Block umfasst dabei von 2 bis 20 Umdrehungen der Kurbelwelle. Der Begriff "Block" beschreibt die Zusammenschau von mehreren Kurbelwellenumdrehungen in der Steuereinrichtung. Der Block von Kurbelwellenumdrehungen wird bezogen auf die Ansteuerung des Kraftstoffventils in der Steuereinrichtung gemeinsam betrachtet. Das Kraftstoffventil wird nicht bezogen auf einzelne Umdrehungen der Kurbelwelle, sondern bezogen auf einen Block von Kurbelwellenumdrehungen angesteuert.

Dadurch, dass jeder Block mindestens zwei Umdrehungen der Kurbelwelle umfasst und das Kraftstoffventil in mindestens einem quasistationären Zustand des Zweitaktmotors innerhalb des Blocks genau einmal geöffnet und geschlossen wird, stehen auch bei hohen Drehzahlen wie bei Nenndrehzahl oder Enddrehzahl ausreichend lange Zeiten für die Ansteuerung des Kraftstoffventils bereit, so dass der Einsatz eines vergleichsweise einfach aufgebauten elektromagnetischen Kraftstoffventils ermöglicht wird. Dadurch, dass die Ansteuerung des Kraftstoffventils sowohl für den Leerlauf als auch für hohe Drehzahlen jeweils für einen Block von aufeinander folgenden Umdrehungen der Kurbelwelle erfolgt, wird ein Umschalten zwischen einer zu den Motorzyklen synchronen Ansteuerung und einer zu den Motorzyklen asynchronen Ansteuerung des elektromagnetischen Ventils vermieden. Die Ansteuerung des elektromagnetischen Kraftstoffventils erfolgt immer synchron zu aufeinanderfolgenden Blöcken, die jeweils die gleiche Anzahl von Umdrehungen der Kurbelwelle umfassen.

Die Ansteuerung des Kraftstoffventils erfolgt nach dem Anwerfvorgang in zumindest einem, vorzugsweise in allen quasistationären Zuständen des Zweitaktmotors derart, dass das Kraftstoffventil bezogen auf unterbrechungsfrei aufeinanderfolgende Blöcke von aufeinanderfolgenden Umdrehungen der Kurbelwelle innerhalb jedes Blocks genau einmal geöffnet und geschlossen wird.

Lediglich während des Anwerfvorgangs und während nicht stationären Zuständen kann eine abweichende Ansteuerung des Kraftstoffventils vorteilhaft sein. Da während des Anwerfvorgangs die Drehzahlen vergleichsweise gering sind, ist die Ansteuerung des Kraftstoffventils während des Anwerfvorgangs für die benötigte Schaltzeit des elektromagnetischen Ventils unkritisch. Der Anwerfvorgang erfolgt vorteilhaft durch einen manuellen Handzugstarter. Dieser wird zum Start vom Bediener betätigt.

Die Nenndrehzahl des Zweitaktmotors kann beispielsweise zwischen 9.000 Umdrehungen/Minute bis 12.000 Umdrehungen/Minute betragen. Die Enddrehzahl des Zweitaktmotors kann beispielweise zwischen 12.000 Umdrehungen/Minute und 17.000 Umdrehungen/Minute betragen.

Quasistationäre Zustände des Zweitaktmotors sind vorliegend zumindest alle Zustände, bei denen das Drosselelement über einen Kurbelwellenwinkel von 360° um weniger als 10% der maximalen Verstellung des Drosselelements verstellt wird. Insbesondere sind quasistationäre Zustände des Zweitaktmotors alle Zustände, bei denen das Drosselelement über einen Kurbelwellenwinkel von 360° um weniger als 20% der maximalen Verstellung des Drosselelements verstellt wird. Zustände, bei denen das Drosselelement sehr schnell verstellt wird, beispielsweise Beschleunigungszustände und Verzögerungszustände, sind demnach keine quasistationären Zustände. Beim schnellen Beschleunigen und schnellen Verzögern ändert sich der Kraftstoffbedarf des Zweitaktmotors schlagartig. Dies kann eine Ansteuerung des Kraftstoffventils erfordern, die von der blockweisen Ansteuerung mit genau einem Öffnen und Schließen des Kraftstoffventils je Block abweicht.

Die maximale Verstellung des Drosselelements entspricht der Verstellbewegung, die das Drosselelement zwischen seiner ersten Endlage und seiner zweiten Endlage zurücklegt. Üblicherweise ist das Drosselelement schwenkbar gelagert, so dass der maximale Verstellweg dem Verschwenkwinkel des Drosselelements zwischen seinen Endlagen entspricht.

Vorteilhaft ist der Kurbelgehäuseinnenraum in mindestens einer Stellung des Kolbens über mindestens einen Überströmkanal fluidisch mit dem Brennraum verbunden. Der Ansaugkanal mündet vorteilhaft über eine von dem Kolben gesteuerte Ansaugkanalöffnung an der Zylinderbohrung in den Kurbelgehäuseinnenraum.

Bevorzugt wird das Kraftstoffventil zumindest in dem mindestens einen, insbesondere zumindest in allen quasistationären Zuständen innerhalb jedes Blocks zum gleichen Kurbelwellenwinkel innerhalb des Blocks geöffnet. Insbesondere im Leerlauf, wenn das Kraftstoffventil eine vergleichsweise kurze Öffnungszeit aufweist, kann durch geeignete Wahl des Kurbelwellenwinkels, zu dem das Kraftstoffventil innerhalb des Blocks geöffnet wird, eine Abstimmung auf den im Kurbelgehäuseinnenraum herrschenden Druck während des Öffnungszeitraums erreicht werden. Dadurch, dass die Öffnung des Kraftstoffventils innerhalb jedes Blocks zum gleichen Kurbelwellenwinkel des Blocks erfolgt, muss von der Steuereinrichtung lediglich der Schließzeitpunkt des Kraftstoffventils festgelegt werden, so dass sich eine einfache Ansteuerung ergibt. Die Öffnung des Kraftstoffventils im Leerlauf ist vorteilhaft vergleichsweise kurz, da der Zweitaktmotor im Leerlauf vergleichsweise geringe Kraftstoffmengen benötigt.

Das Kraftstoffventil wird in mindestens einem Betriebszustand innerhalb eines Blocks über einen Kurbelwellenwinkel von mehr als 360° geöffnet. Dadurch, dass das Kraftstoffventil über mehr als 360°, also über mehr als eine vollständige Umdrehung der Kurbelwelle geöffnet wird, kann eine vergleichsweise große Kraftstoffmenge zugeführt werden. Dies ist insbesondere bei hohen Drehzahlen, beispielsweise bei Volllast, vorteilhaft.

Die Anzahl der Umdrehungen der Kurbelwelle je Block ist vorteilhaft als konstanter Wert in der Steuereinrichtung abgespeichert. Die Anzahl der Umdrehungen der Kurbelwelle je Block ist bevorzugt zumindest für alle quasistationären Betriebszustände nicht veränderbar. Die Anzahl der Umdrehungen der Kurbelwelle je Block ist für alle quasistationären Betriebszustände gleich. Für nicht stationäre Zustände kann die Anzahl der Umdrehungen der Kurbelwelle je Block abweichen, insbesondere dann, wenn die blockweise Ansteuerung des Kraftstoffventils innerhalb eines Blocks aufgrund einer Erkennung einer Beschleunigung abgebrochen und unmittelbar ein neuer Block gestartet wird.

Vorteilhaft ermittelt die Steuereinrichtung die gewünschte Öffnungsdauer des Kraftstoffventils anhand mindestens eines Parameters. Der mindestens eine Parameter kann von Randbedingungen, von Triebwerksbedingungen und/oder Umgebungsbedingungen abhängen. Triebwerksbedingungen können beispielsweise Temperatur und/oder Druck des Antriebsmotors sein. Umgebungsbedingungen können beispielsweise der Umgebungsdruck oder die Umgebungstemperatur sein. Randbedingungen können beispielsweise der Verschmutzungsgrad eines Luftfilters oder die an einem Werkzeug eines von dem Zweitaktmotor angetriebenen Arbeitsgeräts anliegende Last sein.

Bevorzugt wird bei der Ermittlung der Öffnungsdauer des Kraftstoffventils die nichtlineare Fördercharakteristik des Kraftstoffs in den Ansaugkanal berücksichtigt. Es hat sich gezeigt, dass die dem Ansaugkanal zugeführte Kraftstoffmenge nicht linear von der Öffnungsdauer des Kraftstoffventils abhängt. Die nichtlineare Fördercharakteristik des Kraftstoffs in den Ansaugkanal ist zum einen bedingt von Druckschwankungen an der Austrittsöffnung, an der der Kraftstoff in den Ansaugkanal übertritt. Zum anderen hat sich gezeigt, dass die im System vorhandene Kraftstoffsäule träge reagiert und beim Öffnen des Kraftstoffventils zunächst die Kraftstoffsäule in Bewegung versetzt werden muss. Beim Schließen des Kraftstoffventils kann selbst dann, wenn kein signifikanter Unterdruck im Ansaugkanal herrscht, noch Kraftstoff aufgrund der Trägheit der Kraftstoffsäule in den Ansaugkanal austreten. Die Ermittlung des Schließzeitpunkts des Kraftstoffventils erfolgt bevorzugt unter Berücksichtigung dieses nichtlinearen Verhaltens. Der Kraftstoff steht vor der Kraftstofföffnung vorteilhaft nicht unter Vordruck. Der Kraftstoff ist vorteilhaft nicht druckbeaufschlagt, sondern wird mittels des im Ansaugkanal entstehenden Unterdrucks aus mindestens einer Kraftstofföffnung gefördert. Das Kraftstoffventil erlaubt in geöffnetem Zustand die Förderung von Kraftstoff aus der mindestens einen Kraftstofföffnung mittels Unterdruck.

Es kann vorgesehen sein, dass der Zweitaktmotor ein Drosselelement im Ansaugkanal aufweist. Ein solches Drosselelement ist vorteilhaft vorgesehen, um den freien Strömungsquerschnitt des Ansaugkanals zu steuern. Es kann vorgesehen sein, dass die Stellung des Drosselelements mittels eines Sensors erfasst wird. In vorteilhafter Gestaltung ist die erfasste Stellung des Drosselelements ein Parameter, der zur Ermittlung der Öffnungsdauer des Kraftstoffventils genutzt wird.

Alternativ oder zusätzlich kann ein Drucksensor zur Erfassung des Drucks im Kurbelgehäuseinnenraum und/oder zur Erfassung des Drucks im Ansaugkanal vorgesehen sein. Der ermittelte Druck ist insbesondere ein Parameter, der zur Ermittlung der Öffnungsdauer des Kraftstoffventils genutzt wird. Der Druck kann auch genutzt werden, um eine Verstellung des Drosselelements zu erfassen. Alternativ kann ein Sensor zur Ermittlung der Position des Drosselelements vorgesehen sein.

Alternativ oder zusätzlich kann ein Temperatursensor vorgesehen sein. Vorteilhaft ist die ermittelte Temperatur ein Parameter, der zur Ermittlung der Öffnungsdauer des Kraftstoffventils genutzt wird. Der Temperatursensor ist vorteilhaft zur Ermittlung der Temperatur im Kurbelgehäuseinnenraum oder zur Ermittlung der Temperatur der angesaugten Luft im Ansaugkanal vorgesehen. Alternativ kann auch vorgesehen sein, dass der Temperatursensor eine Bauteiltemperatur des Zweitaktmotors wie beispielsweise die Temperatur des Zylinders oder des Kurbelgehäuses erfasst. Auch mehrere Temperatursensoren zur Ermittlung unterschiedlicher Temperaturen können vorgesehen sein.

Die Öffnungsdauer des Kraftstoffventils wird insbesondere anhand der Drehzahl des Zweitaktmotors ermittelt. In bevorzugter Gestaltung wird die Öffnungsdauer des Kraftstoffventils über ein Kennfeld ermittelt. In alternativer Gestaltung kann vorgesehen sein, dass die Öffnungsdauer des Kraftstoffventils berechnet wird.

Bevorzugt umfasst jeder Block von 3 bis 12, insbesondere von 4 bis 10, vorzugsweise 6 Umdrehungen in der Kurbelwelle. Es hat sich gezeigt, dass bei sehr geringer Anzahl der Umdrehungen der Kurbelwelle je Block die Schaltzeiten des elektromagnetischen Ventils einen erheblichen Einfluss auf die Öffnungszeiten und damit auf die geförderte Kraftstoffmenge haben. Bei einer geringen Anzahl von Umdrehungen der Kurbelwelle je Block ist daher die exakte Dosierung von Kraftstoff schwierig, oder es muss ein vergleichsweise hochwertiges elektromagnetisches Ventil zum Einsatz kommen. Ist die Anzahl der Umdrehungen der Kurbelwelle je Block vergleichsweise hoch, insbesondere größer als 12 Umdrehungen je Block, so kann sich im Brennraum ein inhomogenes Gemisch bilden, da der Kurbelgehäuseinnenraum und der Ansaugkanal zur Zwischenspeicherung des Kraftstoffs nicht ausreichen. Dadurch kann sich ein ungleichmäßiges Betriebsverhalten des Zweitaktmotors ergeben. Diese Nachteile können durch geeignete Wahl der Anzahl von Umdrehungen der Kurbelwelle je Block vermieden werden.

Die Ansteuerung des Kraftstoffventils bezogen auf unterbrechungsfrei aufeinanderfolgende Blöcke von aufeinanderfolgenden Umdrehungen der Kurbelwelle kann im Fall von Beschleunigung oder Verzögerung nachteilig sein, da bei Beschleunigungsvorgängen die zudosierte Kraftstoffmenge im aktuellen Block zu gering und bei Verzögerungsvorgängen die zudosierte Kraftstoffmenge zu groß sein kann. Um auch beim Beschleunigen und beim Verzögern ein gutes Betriebsverhalten und schnelles Ansprechen des Zweitaktmotors zu erzielen, ist vorteilhaft vorgesehen, dass die Ansteuerung des Kraftstoffventils von der Ansteuerung bezogen auf unterbrechungsfrei aufeinanderfolgende Blöcke von aufeinanderfolgenden Umdrehungen der Kurbelwelle, in denen das Kraftstoffventil genau einmal geöffnet und geschlossen wird, abweicht, wenn ein Beschleunigungszustand oder ein Verzögerungszustand erkannt wird.

Wenn die Ansteuerung des Kraftstoffventils von der Ansteuerung bezogen auf unterbrechungsfrei aufeinanderfolgende Blöcke, in denen das Kraftstoffventil genau einmal geöffnet und geschlossen wird, abweicht, kann das Kraftstoffventil häufiger oder seltener als genau einmal je Block geöffnet werden. Alternativ kann vorgesehen sein, die Anzahl der Umdrehungen der Kurbelwelle je Block zu ändern. Besonders bevorzugt kann bei Erkennung einer Beschleunigung das Kraftstoffventil im aktuellen Block länger offen gehalten werden, wenn das Kraftstoffventil bei der Erkennung einer Beschleunigung noch geöffnet ist. Ist das Kraftstoffventil bereits geschlossen, so kann das Kraftstoffventil erneut geöffnet werden. Alternativ kann der aktuelle Block von Umdrehungen der Kurbelwelle abgebrochen und unmittelbar ein neuer Block gestartet werden. Dadurch ist die Anzahl der Umdrehungen der Kurbelwelle für den Block, innerhalb dessen die Beschleunigung erkannt wurde, geringer. Für den folgenden, unmittelbar nach Erkennung der Beschleunigung begonnenen Block kann die Anzahl der Umdrehungen der Kurbelwelle wieder den ursprünglichen Wert annehmen und die gewünschte Kraftstoffmenge durch geeignete Wahl des Schließzeitpunkts des Kraftstoffventils gesteuert werden. Wird eine Verzögerung erkannt, so kann das Kraftstoffventil über einen Block von Umdrehungen der Kurbelwelle geschlossen gehalten werden. Auch eine Erhöhung der Anzahl der Umdrehungen der Kurbelwelle je Block kann für den Verzögerungsfall vorgesehen sein.

Beim Beschleunigen und Verzögern handelt es sich um instationäre Zustände, in denen das Drosselelement über einen Kurbelwellenwinkel von 360° um mehr als 10%, insbesondere mehr als 20%, bevorzugt um mehr als 30% der maximalen Verstellung des Drosselelements verstellt wird.

Ein Ausführungsbeispiel der Erfindung wird im Folgenden anhand der Zeichnung erläutert. Es zeigen:
- Fig. 1: eine schematische Darstellung einer Motorsäge mit einem Zweitaktmotor,
- Fig. 2: eine schematische Schnittdarstellung durch die Motorsäge aus Fig. 1,
- Fig. 3: eine schematische Darstellung eines Schnitts durch den Zweitaktmotor der Motorsäge aus Fig. 1,
- Fig. 4: eine schematische Darstellung eines Vergasers, der alternativ zur Kraftstoffzufuhr zu dem Zweitaktmotor aus Fig. 3 zum Einsatz kommen kann,
- Fig. 5: eine schematische Darstellung der Bestromung des elektromagnetischen Ventils und des Druckverlaufs im Kurbelgehäuseinnenraum über dem Kurbelwellenwinkel für den Leerlauf,
- Fig. 6: eine schematische Darstellung entsprechend Fig. 5 für die Nenndrehzahl,
- Fig. 7: eine schematische Darstellung der geförderten Kraftstoffmenge durch das elektromagnetische Ventil über der Zeit.

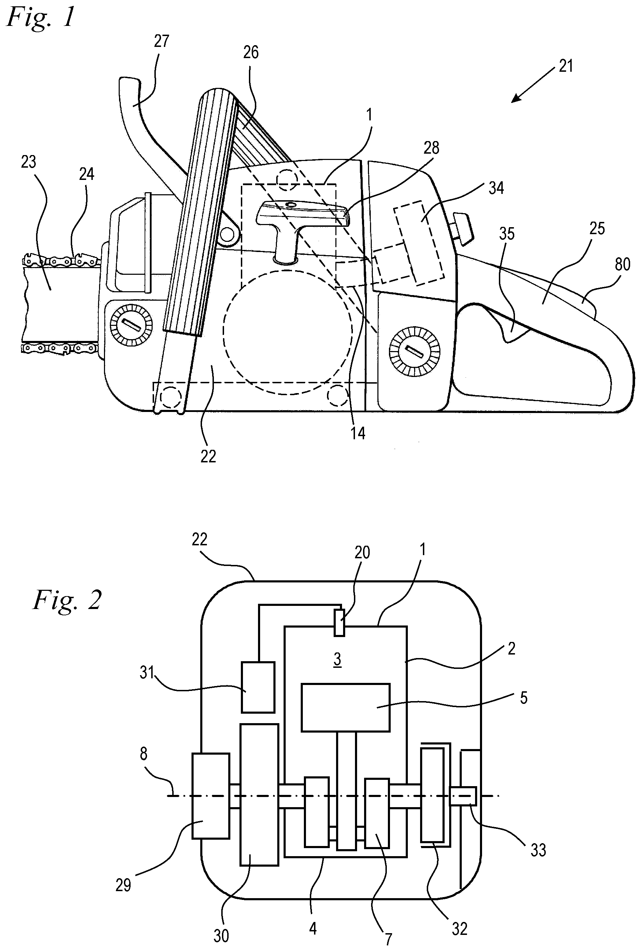

Fig. 1 zeigt als Ausführungsbeispiel für ein handgeführtes Arbeitsgerät, bei dem das erfindungsgemäße Verfahren zum Betrieb eines Zweitaktmotors eingesetzt werden kann, eine Motorsäge 21. Das erfindungsgemäße Verfahren kann auch bei anderen Zweitaktmotoren 1, insbesondere bei Zweitaktmotoren in anderen Arbeitsgeräten, bevorzugt handgeführten Arbeitsgeräten wie beispielsweise Trennschleifern, Freischneidern, Blasgeräten, Erntegeräten, Rasenmähern oder dergleichen zum Einsatz kommen.

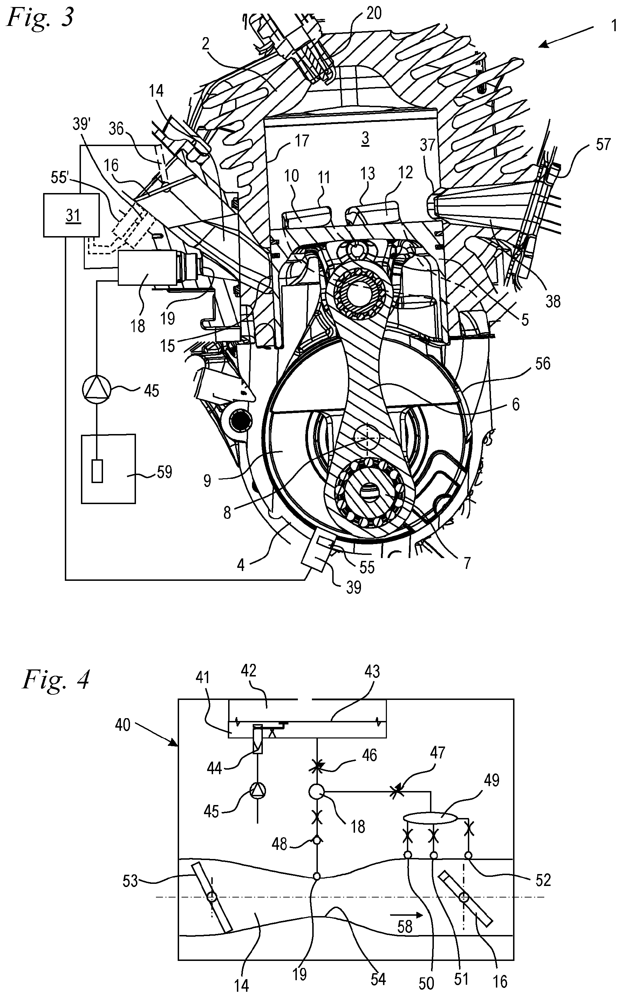

Die Motorsäge 21 besitzt ein Gehäuse 22, das aus mehreren Gehäuseteilen zusammengesetzt sein kann und nicht geschlossen ausgebildet sein muss. Im Gehäuse 22 ist ein Zweitaktmotor 1 angeordnet. Der Zweitaktmotor 1 weist einen Ansaugkanal 14 auf, über den im Betrieb Luft durch einen Luftfilter 34 gesaugt wird. Zum Führen der Motorsäge 21 im Betrieb sind ein hinterer Handgriff 25 sowie ein Griffbügel 26 vorgesehen. Am Gehäuse 22 ist eine Führungsschiene 23 festgelegt, an der eine Sägekette 24 umlaufend angeordnet ist. Die Sägekette 24 ist vom Zweitaktmotor 1 angetrieben. An der der Führungsschiene 23 zugewandten Seite des Griffbügels 26 ist ein Handschutz 27 angeordnet, der zur Auslösung einer nicht dargestellten Kettenbremse dienen kann. Am hinteren Handgriff 25 sind vorteilhaft Bedienelemente zur Bedienung des Zweitaktmotors 1 angeordnet. Im Ausführungsbeispiel ist ein Gashebel 35 am hinteren Handgriff 25 angeordnet, mit dem die Stellung eines im Ansaugkanal 14 angeordneten, in Fig. 1 nicht dargestellten Drosselelements 16 (Fig. 3) verändert werden kann. Am hinteren Handgriff 25 ist außerdem eine Gashebelsperre 80 angeordnet, die in unbetätigtem Zustand den Gashebel 35 mechanisch blockiert.

Fig. 2 zeigt schematisch den Aufbau des Triebwerks der Motorsäge 21. Der Zweitaktmotor 1 weist einen Zylinder 2 auf, in dem ein Kolben 5 hin- und hergehend gelagert ist. Der Kolben 5 begrenzt einen Brennraum 3. In den Brennraum 3 ragt eine Zündkerze 20, die von einer Steuereinrichtung 31 angesteuert ist. Der Kolben 5 treibt eine in einem Kurbelgehäuse 4 um eine Drehachse 8 drehbar gelagerte Kurbelwelle 7 an. Die Kurbelwelle 7 trägt im Ausführungsbeispiel ein Schwungrad 30. Das Schwungrad 30 kann vorteilhaft als Lüfterrad ausgebildet sein, das Kühlluft zum Zylinder 2 fördert. Die Steuereinrichtung 31 kann ein Zündmodul umfassen, in dem von am Schwungrad 30 angeordneten Magneten eine Spannung induziert wird. Hierzu ist die Steuereinrichtung 31 vorteilhaft am Außenumfang des Schwungrads 30 angeordnet. Alternativ kann die Steuereinrichtung 31 auch mit einem mit der Kurbelwelle 7 verbundenen Generator verbunden sein, der die Energie für die Erzeugung des Zündfunkens generiert. An der Kurbelwelle 7 ist außerdem eine Anwerfvorrichtung 29 zum Anwerfen des Zweitaktmotors 1 angeordnet. Die Anwerfvorrichtung 29 ist im Ausführungsbeispiel ein Seilzugstarter und weist den in Fig. 1 schematisch dargestellten Anwerfgriff 28 auf. Der Seilzugstarter wird vorteilhaft zum manuellen Starten durch einen Bediener genutzt. Die Anwerfvorrichtung 29 kann jedoch auch eine elektrisch angetriebene Anwerfvorrichtung sein. Im Ausführungsbeispiel ist auf der dem Schwungrad 30 gegenüberliegenden Seite des Kurbelgehäuses 4 eine Fliehkraftkupplung 32 mit der Kurbelwelle 7 verbunden. Die Abtriebsseite der Fliehkraftkupplung 32 trägt ein Antriebsritzel 33, das die Sägekette 24 antreibt. Als Abtriebsseite der Fliehkraftkupplung 32 ist in Fig. 2 schematisch eine Kupplungsglocke dargestellt.

Fig. 3 zeigt den Aufbau des Zweitaktmotors 1 im Einzelnen. Der Kolben 5 ist in einer Zylinderbohrung 17 hin- und hergehend gelagert. Der Kolben 5 treibt die Kurbelwelle 7 über ein Pleuel 6 rotierend an. Der Ansaugkanal 14 mündet mit einer Ansaugkanalöffnung 15 an der Zylinderbohrung 17. Die Ansaugkanalöffnung 15 ist im Ausführungsbeispiel vom Kolben 5 gesteuert und öffnet und schließt in Abhängigkeit der Position des Kolbens 5. Im Bereich des oberen Totpunkts des Kolbens 5 ist der Ansaugkanal 14 über die geöffnete Ansaugkanalöffnung 15 mit einem Kurbelgehäuseinnenraum 9 verbunden. Im Bereich des unteren Totpunkts des Kolbens 5, der in Fig. 3 dargestellt ist, ist der Kurbelgehäuseinnenraum 9 fluidisch über Überströmkanäle 10 und 12 mit dem Brennraum 3 verbunden. Im Ausführungsbeispiel ist ein einlassnaher Überströmkanal 10 dargestellt, der mit einem Überströmfenster 11 in den Brennraum 3 mündet, sowie ein auslassnaher Überströmkanal 12, der mit einem Überströmfenster 13 in den Brennraum mündet. Im Ausführungsbeispiel sind zwei auf gegenüberliegenden Seiten des Zylinders 2 angeordnete einlassnahe Überströmkanäle 10 und zwei einander gegenüberliegende auslassnahe Überströmkanäle 12 zu einem gemeinsamen Überströmkanal zusammengefasst und münden an einer gemeinsamen Mündungsöffnung 56 in den Kurbelgehäuseinnenraum 9. Es kann jedoch auch vorgesehen sein, dass jeder Überströmkanal 10, 12 mit einer separaten Mündungsöffnung 56 in den Kurbelgehäuseinnenraum 9 mündet.

Aus dem Brennraum 3 führt eine Auslassöffnung 37, an die ein Auslasskanal 38 anschließt. Die Auslassöffnung 37 ist ebenfalls vom Kolben 5 gesteuert. Der Auslasskanal 38 mündet bevorzugt in einen Abgasschalldämpfer 57, von dem in Fig. 3 nur der Bereich der Einlassöffnung für Abgas dargestellt ist.

Zur Zufuhr von Kraftstoff weist der Zweitaktmotor 1 im Ausführungsbeispiel nach Fig. 3 ein Kraftstoffventil 18 auf. Das Kraftstoffventil 18 ist als elektromagnetisches Ventil ausgebildet. Dem Kraftstoffventil 18 wird Kraftstoff aus einem Kraftstofftank 59 von einer Kraftstoffpumpe 45 zugeführt. Die Kraftstoffpumpe 45 ist insbesondere eine vom schwankenden Druck im Kurbelgehäuseinnenraum 9 angetriebene Membranpumpe. Das Kraftstoffventil 18 ist von der Steuereinrichtung 31 angesteuert. Das Kraftstoffventil 18 kann dabei ein stromlos offenes Ventil oder ein stromlos geschlossenes Ventil sein. Das Kraftstoffventil 18 weist eine Austrittsöffnung 19 auf, über die der vom Kraftstoffventil 18 zugemessene Kraftstoff in den Ansaugkanal 14 austritt. Das Kraftstoffventil 18 misst die gesamte dem Zweitaktmotor 1 zugeführte Kraftstoffmenge zu. Weitere Kraftstoffventile oder Kraftstofföffnungen, über die Kraftstoff zugeführt wird, sind vorzugsweise nicht vorgesehen.

Im Ansaugkanal 14 ist ein Drosselelement 16, im Ausführungsbeispiel eine Drosselklappe, angeordnet. Die Stellung des Drosselelements 16 ist über den Gashebel 35 (Fig. 1) vom Bediener einstellbar. Damit kann der Bediener die dem Zweitaktmotor 1 zugeführte Menge an Luft einstellen.

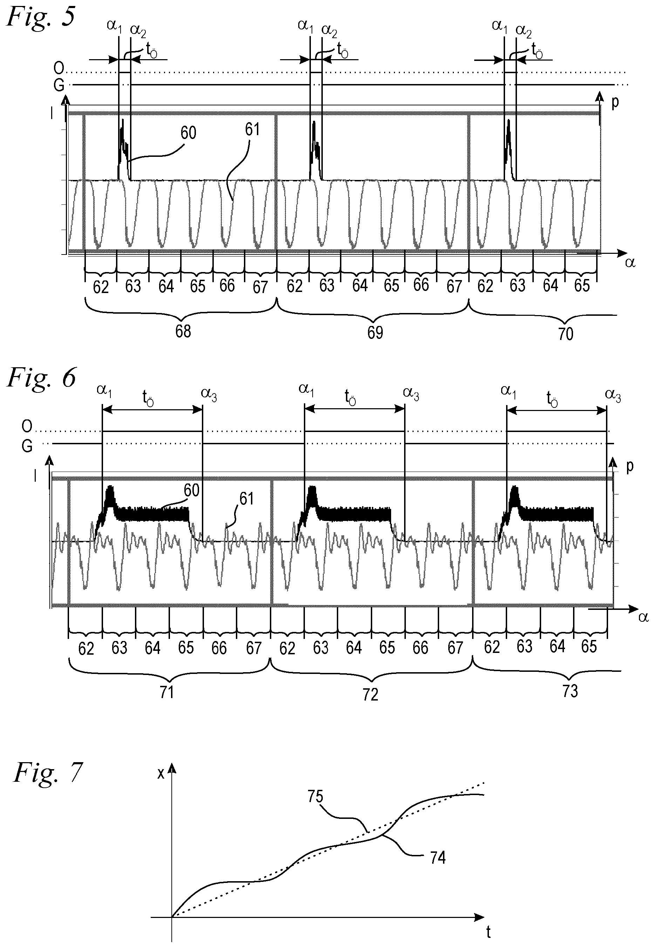

Die Steuereinrichtung 31 steuert das Kraftstoffventil 18 bezogen auf aufeinanderfolgende Blöcke von mehreren aufeinanderfolgenden Umdrehungen der Kurbelwelle 7 an, wie im Folgenden noch ausführlich zu Fig. 5 und 6 beschrieben wird. Die Steuereinrichtung 31 legt den Zeitpunkt, zu dem das Kraftstoffventil 18 geschlossen wird, für jeden Block von mehreren Umdrehungen der Kurbelwelle 7 fest. Der Zeitpunkt, zu dem das Kraftstoffventil 18 in jedem Block von Umdrehungen der Kurbelwelle geöffnet wird, ist vorteilhaft in der Steuereinrichtung 31 fest vorgegeben. In alternativer Gestaltung kann auch vorgesehen sein, dass der Öffnungszeitpunkt des Kraftstoffventils 18 ermittelt wird. Die Ermittlung der Öffnungsdauer des Kraftstoffventils 18 durch die Steuereinrichtung 31 erfolgt anhand von Parametern. Diese Parameter berücksichtigen vorteilhaft Randbedingungen, Triebwerksbedingungen und/oder Umgebungsbedingungen. Die Steuereinrichtung 31 berücksichtigt auch, dass das Kraftstoffventil 18 ein nichtlineares Förderverhalten aufweist, wie im Folgenden noch zu Fig. 7 beschrieben wird.

Ein Parameter, den die Steuereinrichtung 31 bei der Ermittlung der Öffnungsdauer des Kraftstoffventils 18 berücksichtigt, kann die Stellung des Drosselelements 16 sein. Zur Erfassung der Stellung des Drosselelements 16 ist vorteilhaft ein Sensor 36 vorgesehen. Der Sensor 36 ist vorteilhaft außerhalb des Ansaugkanals 14 angeordnet, in Fig. 3 also vor oder hinter der Blattebene, und daher mit gestrichelter Linie dargestellt. Alternativ oder zusätzlich wird vorteilhaft ein Druck des Zweitaktmotors 1 erfasst. Im Ausführungsbeispiel ist ein Drucksensor 39 vorgesehen, der den Druck im Kurbelgehäuseinnenraum 9 erfasst. Der Drucksensor 39 ist hierzu am Kurbelgehäuse 45 angeordnet. Alternativ oder zusätzlich kann ein Drucksensor 39' vorgesehen sein, der den Druck im Ansaugkanal 14 erfasst. Hierzu ist der in Fig. 3 schematisch dargestellte Drucksensor 39' vorteilhaft am Ansaugkanal 14 angeordnet. Alternativ oder zusätzlich kann ein Temperatursensor 55 zur Erfassung der Temperatur im Kurbelgehäuseinnenraum 9 vorgesehen sein. Alternativ oder zusätzlich kann die Temperatur der angesaugten Luft im Ansaugkanal 14 erfasst werden. Hierzu ist in Fig. 3 schematisch ein Temperatursensor 55' eingezeichnet. Auch weitere und/oder andere Parameter können zur Ermittlung der Öffnungsdauer des Kraftstoffventils 18 genutzt werden.

Beim Ausführungsbeispiel nach Fig. 3 dosiert das Kraftstoffventil 18 den Kraftstoff unmittelbar in den Ansaugkanal 14 zu. Alternativ kann das Kraftstoffventil 18 in einem Vergaser 40 angeordnet sein, bei dem der Kraftstoff aufgrund des im Ansaugkanal 14 herrschenden Unterdrucks angesaugt wird. Ein solcher Vergaser 40 ist schematisch in Fig. 4 dargestellt. Der Vergaser 40 weist eine Kraftstoffpumpe 45 zur Förderung von Kraftstoff auf. Die Kraftstoffpumpe 45 ist bevorzugt eine Membranpumpe, die insbesondere vom schwankenden Druck im Kurbelgehäuseinnenraum 9 angetrieben ist. Der Vergaser 40 umfasst eine Regelkammer 41, die von einer Kompensationskammer 42 über eine Regelmembran 43 getrennt ist. Am Eintritt in die Regelkammer 41 ist ein Einlassventil 44 angeordnet, das in Abhängigkeit der Stellung der Regelmembran 43 öffnet bzw. schließt. Aus der Regelkammer 41 wird Kraftstoff über eine einstellbare Drossel 46 zum elektromagnetischen Kraftstoffventil 18 zugeführt. Von dort gelangt der Kraftstoff über ein Rückschlagventil 48 zur Austrittsöffnung 19. Die Austrittsöffnung 19 mündet im Bereich eines Venturis 54 in den Ansaugkanal 14. Der vom elektromagnetischen Kraftstoffventil 18 zugemessene Kraftstoff wird außerdem über eine einstellbare Drossel 47 zu einer Kraftstoffkammer 49 geleitet, die über Kraftstoffleitungen mit Festdrosseln an Austrittsöffnungen 50, 51 und 52 in den Ansaugkanal 14 mündet. Die Austrittsöffnung 50 ist im Ausführungsbeispiel eine Teillastöffnung, die bezogen auf die Strömungsrichtung 58 im Ansaugkanal 14 stromauf des Drosselelements 16 in den Ansaugkanal 14 mündet. Die Kraftstofföffnungen 51 und 52 sind Leerlaufkraftstofföffnungen. Bei geöffnetem Drosselelement 16 tritt über die Kraftstofföffnung 51 Luft in die Kraftstoffkammer 49 ein und das hier gebildete Gemisch tritt über die Austrittsöffnung 52 in den Ansaugkanal 14 aus.

Bezogen auf die Strömungsrichtung 58 im Ansaugkanal 14, die zur Ansaugkanalöffnung 15 gerichtet ist, ist stromauf des Drosselelements 15 ein Chokeelement 53 im Ansaugkanal 14 angeordnet. Über das Chokeelement 53 kann der Unterdruck an den Austrittsöffnungen 19 und 50 bis 52 während des Anwerfvorgangs erhöht werden, um die zugeführte Kraftstoffmenge während des Anwerfvorgangs zu erhöhen.

Auch bei dem in Fig. 4 dargestellten Ausführungsbeispiel der Kraftstoffzufuhr über einen Vergaser 40 wird die gesamte, vom Ansaugkanal 14 zugeführte Kraftstoffmenge von dem elektromagnetischen Kraftstoffventil 18 gesteuert.

Fig. 5 zeigt die erfindungsgemäß vorgesehene Ansteuerung des Kraftstoffventils 18 mittels einer Kurve 60, die den Strom I, mit dem das Kraftstoffventil 18 bestromt wird, über den Kurbelwellenwinkel α zeigt. Die Kurve 61 zeigt den Verlauf des Drucks p im Ansaugkanal 14. Bezogen auf die Ansteuerung des Kraftstoffventils 18 sind mehrere aufeinander folgende Umdrehungen 62, 63, 64, 65, 66 und 67 der Kurbelwelle 7 zu einem Block 68 zusammengefasst. Ein darauffolgender Block 69 umfasst ebenfalls Umdrehungen 62 bis 67 der Kurbelwelle 7. Gleiches gilt für einen auf den Block 69 folgenden Block 70 und alle weiteren darauffolgenden Blöcke. Die Anzahl von Umdrehungen der Kurbelwelle je Block 68, 69, 70 ist dabei für alle Blöcke 68, 69, 70 gleich. Die Anzahl der Umdrehungen der Kurbelwelle 7 je Block 68 bis 70 beträgt von 2 bis 20 Umdrehungen 62 bis 67. Vorteilhaft umfasst jeder Block 68 bis 70 von 3 bis 12, insbesondere von 4 bis 10 Umdrehungen der Kurbelwelle 7. Im Ausführungsbeispiel sind 6 Umdrehungen 62 bis 67 der Kurbelwelle 7 je Block 68 bis 70 vorgesehen. 6 Umdrehungen der Kurbelwelle 7 je Block 68 bis 70 werden als besonders bevorzugt angesehen.

Jeder Block 68 bis 70 erstreckt sich über einen Kurbelwellenwinkel α, der der Anzahl der Umdrehungen der Kurbelwelle 7 je Block 68 bis 70 multipliziert mit 360° Kurbelwellenwinkel entspricht. Alle Blöcke 68, 69 und 70 folgen unmittelbar aufeinander. Jeder Block umfasst eine ganzzahlige Anzahl von Umdrehungen der Kurbelwelle 7.

Jeder Block 68 bis 70 bezeichnet demnach ein Zeitintervall, das einem ganzzahligen Vielfachen von 360° Kurbelwellenwinkel entspricht.

Der Zustand des Kraftstoffventils 18 ist in Fig. 5 und Fig. 6 schematisch mit den Buchstaben "G" für geschlossen und "O" für offen gekennzeichnet. Wie Fig. 5 zeigt, erfolgt das Öffnen und Schließen des Kraftstoffventils 18 aufgrund der Trägheit des Systems geringfügig zeitversetzt zum Beginn der Bestromung. Innerhalb des ersten Blocks 68 öffnet das Kraftstoffventil 18 zu einem Kurbelwellenwinkel α₁. Zu einem darauffolgenden Kurbelwellenwinkel α₂ schließt das Kraftstoffventil 18. Bei dem Kraftstoffventil 18 gemäß Fig. 5 handelt es sich um ein stromlos geschlossenes Ventil. Bei einem stromlos offenen Kraftstoffventil 18 erfolgt die Bestromung entsprechend in umgekehrter Weise. Der Kurbelwellenwinkel α₁ liegt im Ausführungsbeispiel kurz vor dem Öffnen der Ansaugkanalöffnung 15, so dass das Kraftstoffventil 18 geöffnet ist, wenn sich Unterdruck im Ansaugkanal 14 aufbaut, wie die Kurve 61 zeigt. Die Öffnungsdauer t_{Ö}, die vom Kurbelwellenwinkel α₁ beim Öffnen bis zum Kurbelwellenwinkel α₂ beim Schließen des Kraftstoffventils 18 vergeht, ist deutlich kleiner als 360°. Das Kraftstoffventil 18 ist demnach bei der in Fig. 5 dargestellten Öffnungsdauer t_{Ö} für den Leerlauf über weniger als eine Umdrehung der Kurbelwelle 7 geöffnet. Vorteilhaft bezeichnet das Öffnen des Kraftstoffventils 18 den Zeitpunkt, zu dem das Kraftstoffventil 18 vollständig geöffnet ist, und das Schließen des Kraftstoffventils 18 bezeichnet den Zeitpunkt, zu dem das Kraftstoffventil 18 vollständig geschlossen ist.

Fig. 6 zeigt entsprechende Kurven 60 und 61 für einen anderen Betriebszustand, im Ausführungsbeispiel für die Nenndrehzahl, beispielsweise bei Volllast. Jeweils 6 Umdrehungen 62 bis 67 der Kurbelwelle 7 bilden einen Block 71, 72, 73, wobei die Blöcke 71, 72, 73 unterbrechungsfrei aufeinander folgen. In jedem Block wird das Kraftstoffventil 18 zum Kurbelwellenwinkel α₁ geöffnet. Der Kurbelwellenwinkel α₁ ist für Leerlauf (Fig. 5) und Nenndrehzahl (Fig. 6) gleich. Bevorzugt ist der Kurbelwellenwinkel α₁, bei dem das Kraftstoffventil 18 geöffnet wird, zumindest für alle quasistationären Betriebszustände des Zweitaktmotors 1 - ggf. mit Ausnahme des Anwerfvorgangs und mit Ausnahme instationärer Zustände des Zweitaktmotors - gleich. Für den Anwerfvorgang kann das Kraftstoffventil 18 zum Kurbelwellenwinkel α₁ oder bei einem anderen Kurbelwellenwinkel geöffnet werden. Wird beim Erkennen eines Beschleunigungswunsches, also eines schnellen Öffnens des Drosselelements, der aktuelle Block abgebrochen und ein neuer Block gestartet, so kann das Kraftstoffventil 18 bezogen auf diesen neuen Block wieder beim gleichen Kurbelwellenwinkel α₁ geöffnet werden. Der Beginn der Bestromung des Kraftstoffventils 18 wird für alle Betriebszustände auf den gewünschten Öffnungszeitpunkt angepasst gewählt. Das Ende der Bestromung wird für alle Betriebszustände auf den gewünschten Schließzeitpunkt angepasst gewählt.

Bei Nenndrehzahl wird das Kraftstoffventil 18 im Ausführungsbeispiel bei einem Kurbelwellenwinkel α₃ geschlossen, der innerhalb der vierten Umdrehung 65 der Kurbelwelle 7 innerhalb des Blocks 71 liegt. Wie Fig. 6 zeigt, ist die Öffnungsdauer t_{Ö} bei Nenndrehzahl, beispielsweise bei Volllast deutlich größer als die Öffnungsdauer t_{Ö} des Kraftstoffventils 18 im Leerlauf. Die Öffnungsdauer t_{Ö} erstreckt sich im Ausführungsbeispiel bei Nenndrehzahl über mehr als drei vollständige Umdrehungen 63, 64, 65 der Kurbelwelle 7. Auch eine längere oder kürzere Öffnungsdauer t_{Ö} kann vorteilhaft sein. Wie Fig. 6 auch zeigt, ergeben sich bei Nenndrehzahl deutliche Schwankungen des Druckverlaufs im Ansaugkanal 14 auch dann, wenn die Ansaugkanalöffnung 15 geschlossen ist, also nur ein geringer Unterdruck im Ansaugkanal 14 herrscht.

Der Kurbelwellenwinkel α₂ bzw. α₃, zu dem das Kraftstoffventil 18 geschlossen wird, wird von der Steuereinrichtung 31 aufgrund von Parametern bestimmt. Die Parameter können die Stellung des Drosselelements 16, der Druck im Kurbelgehäuseinnenraum 9, eine Temperatur des Zweitaktmotors 1, beispielsweise im Kurbelgehäuseinnenraum 9 oder im Ansaugkanal 14 oder eine Bauteiltemperatur des Zweitaktmotors 1 und/oder die Drehzahl des Zweitaktmotors 1 sein. Bevorzugt werden mehrere Parameter zur Bestimmung des Schließzeitpunkts genutzt. Die Ermittlung der Öffnungsdauer t_{Ö}, insbesondere die Ermittlung des Kurbelwellenwinkels α₂ oder α₃, zu dem das Kraftstoffventil 18 geschlossen wird, wird bevorzugt über ein Kennfeld ermittelt, das einen oder mehrere Parameter über der Drehzahl des Zweitaktmotors 1 angibt. Das Kennfeld kann beispielsweise die Öffnungsdauer t_{Ö} über der Drehzahl und dem Drosselklappenwinkel angeben.

Die Fördercharakteristik des Kraftstoffventils 18 ist nichtlinear. Dies ist in Fig. 7 schematisch dargestellt. Mit gestrichelter Linie ist eine Kurve 75 dargestellt, die als Vergleichskurve einen linearen Zusammenhang zwischen der zugeführten Kraftstoffmenge x und der Zeit t angibt. Die Kurve 74 gibt schematisch den tatsächlichen Verlauf der zugeführten Kraftstoffmenge x über der Zeit t wieder. Die Kurve 74 beschreibt damit die Fördercharakteristik. Wie Fig. 7 zeigt, schwankt die Kurve 74. Die Schwankungen der Kurve 74 ergeben sich zum einen aufgrund des schwankenden Drucks im Ansaugkanal 14 und zum anderen aus der Trägheit der bei der Zufuhr von Kraftstoff zu bewegenden Kraftstoffsäule. Dadurch ergeben sich ein verzögerter Beginn und ein verzögertes Ende der tatsächlichen Kraftstoffzufuhr gegenüber dem Öffnungszeitpunkt und Schließzeitpunkt des Kraftstoffventils 18. Diese Nichtlinearität wird bei der Bestimmung des Kurbelwellenwinkels α₂ bzw. α₃, zu dem das Kraftstoffventil 18 geschlossen wird, berücksichtigt. Dadurch kann eine vergleichsweise genaue Dosierung der zuzuführenden Kraftstoffmenge auch bei Verwendung eines vergleichsweise einfach aufgebauten elektromagnetischen Kraftstoffventils 18 erzielt werden.

Dadurch, dass der Kurbelwellenwinkel α₂ bzw. α₃, bei dem das Kraftstoffventil 18 geschlossen wird, für jeden Block 68 bis 73 von Umdrehungen 62 bis 67 der Kurbelwelle 7 ermittelt wird, kann auf geänderte Betriebsbedingungen, beispielsweise einen Beschleunigungswunsch des Bedieners, der sich in der Öffnung des Drosselelements 16 äußert, schnell reagiert werden. Die Betriebsbedingungen werden dabei vorteilhaft für jede Umdrehung 62 bis 67 der Kurbelwelle 7 erfasst. Besonders vorteilhaft wird der Kurbelwellenwinkel α₂ bzw. α₃ für den Fall, dass das Kraftstoffventil 18 im aktuellen Block 68 bis 73 noch geöffnet ist, unmittelbar in Abhängigkeit der geänderten Betriebsbedingungen geändert. Ist das Kraftstoffventil 18 im aktuellen Block 68 bis 73 bereits geschlossen, wird die geänderte Betriebsbedingung vorteilhaft für den darauffolgenden Block 68 bis 73 von Umdrehungen der Kurbelwelle 7 berücksichtigt. Es kann vorgesehen sein, den aktuellen Block 68 bis 73 abzubrechen und bezüglich der Ansteuerung des Kraftstoffventils 18 unmittelbar einen neuen Block 68 bis 73 zu starten.

Die Ansteuerung des Kraftstoffventils 18 erfolgt nach dem Anwerfvorgang für mindestens einen, insbesondere für alle quasistationären Zustände des Zweitaktmotors derart, dass das Kraftstoffventil 18 bezogen auf unterbrechungsfrei aufeinanderfolgende Blöcke 68 bis 73 von aufeinanderfolgenden Umdrehungen der Kurbelwelle innerhalb jedes Blocks 68 bis 73 genau einmal geöffnet und geschlossen wird.

## Patentansprüche

1. Verfahren zum Betrieb eines Zweitaktmotors mit einem Zylinder (2) und einem Kurbelgehäuse (4), wobei in dem Zylinder (2) ein Brennraum (3) ausgebildet ist, wobei der Brennraum (3) von einem in dem Zylinder (2) hin- und hergehend gelagerten Kolben (5) begrenzt ist, wobei der Kolben (5) eine in dem Kurbelgehäuse (4) drehbar gelagerte Kurbelwelle (7) rotierend antreibt, mit einem Ansaugkanal (14), mit einem im Ansaugkanal (14) angeordneten Drosselelement (16), mit einem elektromagnetischen Kraftstoffventil (18), das die über mindestens eine Austrittsöffnung (19) in den Ansaugkanal (14) zugeführte Kraftstoffmenge (x) steuert, und mit einer Steuereinrichtung (31), die zur Ansteuerung des Kraftstoffventils (18) ausgebildet ist, wobei ein quasistationärer Zustand des Zweitaktmotors (1) ein Zustand ist, bei dem das Drosselelement (16) über einen Kurbelwellenwinkel (α) von 360° um weniger als 10% der maximalen Verstellung des Drosselelements (16) verstellt wird, **dadurch gekennzeichnet, dass** die Ansteuerung des Kraftstoffventils (18) nach dem Anwerfvorgang in zumindest einem quasistationären Zustand des Zweitaktmotors (1) derart erfolgt, dass das Kraftstoffventil (18) bezogen auf unterbrechungsfrei aufeinanderfolgende Blöcke (68, 69, 70, 71, 72, 73) von aufeinanderfolgenden Umdrehungen (62, 63, 64, 65, 66, 67) der Kurbelwelle (7) innerhalb jedes Blocks (68, 69, 70, 71, 72, 73) genau einmal geöffnet und geschlossen wird, wobei jeder Block (68, 69, 70, 71, 72, 73) von 2 bis 20 Umdrehungen (62, 63, 64, 65, 66, 67) der Kurbelwelle (7) umfasst, dass das Kraftstoffventil (18) zumindest in einem quasistationären Betriebszustand innerhalb eines Blocks (71, 72, 73) über einen Kurbelwellenwinkel (α) von mehr als 360° geöffnet wird.

2. Verfahren nach Anspruch 1,
**dadurch gekennzeichnet, dass** das Kraftstoffventil (18) in dem quasistationären Zustand innerhalb jedes Blocks (68, 69, 70, 71, 72, 73) zum gleichen Kurbelwellenwinkel (α₁) innerhalb des Blocks (68, 69, 70, 71, 72, 73) geöffnet wird.

3. Verfahren nach Anspruch 1 oder 2,
**dadurch gekennzeichnet, dass** die Anzahl der Umdrehungen (62, 63, 64, 65, 66, 67) der Kurbelwelle (7) je Block (68, 69, 70, 71, 72, 73) in dem quasistationären Zustand als konstanter Wert in der Steuereinrichtung (31) abgespeichert ist.

4. Verfahren nach einem der Ansprüche 1 bis 3,
**dadurch gekennzeichnet, dass** die Steuereinrichtung (31) die gewünschte Öffnungsdauer (tö) des Kraftstoffventils (18) anhand mindestens eines Parameters ermittelt.

5. Verfahren nach Anspruch 4,
**dadurch gekennzeichnet, dass** bei der Ermittlung der Öffnungsdauer (tö) des Kraftstoffventils (18) die nichtlineare Fördercharakteristik des Kraftstoffs in den Ansaugkanal (14) berücksichtigt wird.

6. Verfahren nach einem der Ansprüche 1 bis 5,
**dadurch gekennzeichnet, dass** die Stellung des Drosselelements (16) mittels eines Sensors (36) erfasst wird.

7. Verfahren nach Anspruch 6,
**dadurch gekennzeichnet, dass** die erfasste Stellung des Drosselelements (16) ein Parameter ist, der zur Ermittlung der Öffnungsdauer (tö) des Kraftstoffventils (18) genutzt wird.

8. Verfahren nach einem der Ansprüche 1 bis 7,
**dadurch gekennzeichnet, dass** ein Drucksensor (39) zur Erfassung des Drucks in einem Kurbelgehäuseinnenraum (9) des Kurbelgehäuses (4) oder im Ansaugkanal (14) vorgesehen ist und dass der ermittelte Druck ein Parameter ist, der zur Ermittlung der Öffnungsdauer (tö) des Kraftstoffventils (18) genutzt wird.

9. Verfahren nach einem der Ansprüche 1 bis 8,
**dadurch gekennzeichnet, dass** ein Temperatursensor (55, 55') vorgesehen ist und dass die ermittelte Temperatur ein Parameter ist, der zur Ermittlung der Öffnungsdauer (tö) des Kraftstoffventils (18) genutzt wird.

10. Verfahren nach einem der Ansprüche 1 bis 9,
**dadurch gekennzeichnet, dass** die Öffnungsdauer (tö) des Kraftstoffventils (18) anhand der Drehzahl des Zweitaktmotors (1) ermittelt wird.

11. Verfahren nach einem der Ansprüche 1 bis 10,
**dadurch gekennzeichnet, dass** die Öffnungsdauer (tö) des Kraftstoffventils (18) über ein Kennfeld ermittelt wird.

12. Verfahren nach einem der Ansprüche 1 bis 11,
**dadurch gekennzeichnet, dass** in dem quasistationären Zustand jeder Block (68, 69, 70, 71, 72, 73) von 3 bis 12, insbesondere von 4 bis 10, vorzugsweise 6 Umdrehungen (62, 63, 64, 65, 66, 67) der Kurbelwelle (7) umfasst.

13. Verfahren nach einem der Ansprüche 1 bis 12,
**dadurch gekennzeichnet, dass** die Ansteuerung des Kraftstoffventils (18) von der Ansteuerung bezogen auf unterbrechungsfrei aufeinanderfolgende Blöcke (68, 69, 70, 71, 72, 73) von aufeinanderfolgenden Umdrehungen (62, 63, 64, 65, 66, 67) der Kurbelwelle (7), in denen das Kraftstoffventil (18) genau einmal geöffnet und geschlossen wird, abweicht, wenn ein Beschleunigungszustand oder ein Verzögerungszustand erkannt wird.

## Claims

1. Method for operating a two stroke engine having a cylinder (2) and having a crankcase (4), a combustion chamber (3) being formed in the cylinder (2), the combustion chamber (3) being delimited by a piston (5) which is mounted so as to move in reciprocating fashion in the cylinder (2), the piston (5) rotationally driving a crankshaft (7) that is mounted rotatably in the crankcase (4), having an intake channel (14), having a throttle element (16) arranged in the intake channel (14), having an electromagnetic fuel valve (18) that controls the fuel quantity (x) fed via at least one outlet nozzle (19) into the intake channel (14), and having a control device (31) which is configured for controlling the fuel valve (18), a quasi-steady state of the two stroke engine (1) being a state in which the throttle element (16) is adjusted by less than 10% of the maximum adjustment of the throttle element (16) over a crankshaft angle (α) of 360°, **characterized in that** the fuel valve (18) is controlled after the starting process in at least a quasi-steady state of the two stroke engine (1) such that, on the basis of uninterruptedly successive blocks (68, 69, 70, 71, 72, 73) of successive revolutions (62, 63, 64, 65, 66, 67) of the crankshaft (7), the fuel valve (18) is opened and closed exactly once within each block (68, 69, 70, 71, 72, 73), each block (68, 69, 70, 71, 72, 73) comprising from 2 to 20 revolutions (62, 63, 64, 65, 66, 67) of the crankshaft (7), **in that** the fuel valve (18) is opened over a crankshaft angle (α) of more than 360° within one block (71, 72, 73) at least in a quasi-steady operating state.

2. Method according to Claim 1,
**characterized in that**, within each block (68, 69, 70, 71, 72, 73) in the quasi-steady state, the fuel valve (18) is opened at the same crankshaft angle (α₁) within the block (68, 69, 70, 71, 72, 73).

3. Method according to Claim 1 or 2,
**characterized in that** the number of revolutions (62, 63, 64, 65, 66, 67) of the crankshaft (7) per block (68, 69, 70, 71, 72, 73) in the quasi-steady state is stored as a constant value in the control device (31).

4. Method according to any of Claims 1 to 3,
**characterized in that** the control device (31) determines the desired opening duration (tö) of the fuel valve (18) on the basis of at least one parameter.

5. Method according to Claim 4,
**characterized in that** the non-linear delivery characteristic of the fuel into the intake channel (14) is taken into consideration in the determination of the opening duration (tö) of the fuel valve (18).

6. Method according to any of Claims 1 to 5,
**characterized in that** the position of the throttle element (16) is detected by means of a sensor (36).

7. Method according to Claim 6,
**characterized in that** the detected position of the throttle element (16) is a parameter that is used for the determination of the opening duration (tö) of the fuel valve (18).

8. Method according to any of Claims 1 to 7,
**characterized in that** a pressure sensor (39) is provided for detecting the pressure in a crankcase interior (9) of the crankcase (4) or in the intake channel (14), and **in that** the determined pressure is a parameter that is used for the determination of the opening duration (tö) of the fuel valve (18).

9. Method according to any of Claims 1 to 8,
**characterized in that** a temperature sensor (55, 55') is provided, and **in that** the determined temperature is a parameter that is used for the determination of the opening duration (tö) of the fuel valve (18).

10. Method according to any of Claims 1 to 9,
**characterized in that** the opening duration (tö) of the fuel valve (18) is determined on the basis of the rotational speed of the two stroke engine (1).

11. Method according to any of Claims 1 to 10,
**characterized in that** the opening duration (tö) of the fuel valve (18) is determined by means of a characteristic map.

12. Method according to any of Claims 1 to 11,
**characterized in that**, in the quasi-steady state, each block (68, 69, 70, 71, 72, 73) comprises from 3 to 12, in particular from 4 to 10, preferably 6, revolutions (62, 63, 64, 65, 66, 67) of the crankshaft (7).

13. Method according to any of Claims 1 to 12,
**characterized in that** the control of the fuel valve (18) deviates from the control on the basis of uninterruptedly successive blocks (68, 69, 70, 71, 72, 73) of successive revolutions (62, 63, 64, 65, 66, 67) of the crankshaft (7), in which the fuel valve (18) is opened and closed exactly once, if an acceleration state or a deceleration state is identified.

## Revendications

1. Procédé pour faire fonctionner un moteur à deux temps avec un cylindre (2) et un carter de vilebrequin (4), une chambre de combustion (3) étant formée dans le cylindre (2), la chambre de combustion (3) étant délimitée par un piston (5) monté de manière à effectuer un mouvement alternatif dans le cylindre (2), le piston (5) entraînant en rotation un vilebrequin (7) monté de manière rotative dans le carter de vilebrequin (4), comprenant un canal d'admission (14), comprenant un élément d'étranglement (16) disposé dans le canal d'admission (14), comprenant une vanne à carburant (18) électromagnétique qui commande la quantité de carburant (x) amenée dans le canal d'admission (14) par l'intermédiaire d'au moins un orifice de sortie (19), et comprenant un dispositif de commande (31) qui est configuré pour commander la vanne à carburant (18), un état quasi stationnaire du moteur à deux temps (1) étant un état dans lequel l'élément d'étranglement (16) est déplacé, sur un angle de vilebrequin (α) de 360°, de moins de 10 % du déplacement maximal de l'élément d'étranglement (16), **caractérisé en ce que** la commande de la vanne à carburant (18) après l'opération de lancement dans au moins un état quasi stationnaire du moteur à deux temps (1) est effectuée de telle sorte que la vanne à carburant (18), en référence à des blocs (68, 69, 70, 71, 72, 73) successifs sans interruption de tours successifs (62, 63, 64, 65, 66, 67) du vilebrequin (7) est ouverte et fermée exactement une fois à l'intérieur de chaque bloc (68, 69, 70, 71, 72, 73), chaque bloc (68, 69, 70, 71, 72, 73) comprenant de 2 à 20 tours (62, 63, 64, 65, 66, 67) du vilebrequin (7), **en ce que** la vanne de carburant (18), au moins dans un état de fonctionnement quasi stationnaire, est ouverte sur un angle de vilebrequin (α) supérieur à 360° à l'intérieur d'un bloc (71, 72, 73).

2. Procédé selon la revendication 1,
**caractérisé en ce que** la vanne à carburant (18), dans l'état quasi stationnaire, est ouverte à l'intérieur de chaque bloc (68, 69, 70, 71, 72, 73) au même angle de vilebrequin (α₁) à l'intérieur du bloc (68, 69, 70, 71, 72, 73).

3. Procédé selon la revendication 1 ou 2,
**caractérisé en ce que** le nombre de tours (62, 63, 64, 65, 66, 67) du vilebrequin (7) par bloc (68, 69, 70, 71, 72, 73) à l'état quasi stationnaire est enregistré en tant que valeur constante dans le dispositif de commande (31).

4. Procédé selon l'une des revendications 1 à 3,
**caractérisé en ce que** le dispositif de commande (31) détermine la durée d'ouverture (tö) souhaitée de la vanne à carburant (18) à l'aide d'au moins un paramètre.

5. Procédé selon la revendication 4,
**caractérisé en ce que**, lors de la détermination de la durée d'ouverture (tö) de la vanne à carburant (18), la caractéristique de transport non linéaire du carburant dans le canal d'admission (14) est prise en compte.

6. Procédé selon l'une des revendications 1 à 5,
**caractérisé en ce que** la position de l'élément d'étranglement (16) est détectée au moyen d'un capteur (36).

7. Procédé selon la revendication 6,
**caractérisé en ce que** la position détectée de l'élément d'étranglement (16) est un paramètre qui est utilisé pour déterminer la durée d'ouverture (tö) de la vanne à carburant (18).

8. Procédé selon l'une des revendications 1 à 7,
**caractérisé en ce qu'**un capteur de pression (39) est présent pour détecter la pression dans un espace intérieur de carter de vilebrequin (9) du carter de vilebrequin (4) ou dans le canal d'admission (14) et **en ce que** la pression déterminée est un paramètre qui est utilisé pour déterminer la durée d'ouverture (tö) de la vanne à carburant (18).

9. Procédé selon l'une des revendications 1 à 8,
**caractérisé en ce qu'**un capteur de température (55, 55') est présent et **en ce que** la température déterminée est un paramètre qui est utilisé pour déterminer la durée d'ouverture (tö) de la vanne à carburant (18).

10. Procédé selon l'une des revendications 1 à 9,
**caractérisé en ce que** la durée d'ouverture (tö) de la vanne à carburant (18) est déterminée à l'aide de la vitesse de rotation du moteur à deux temps (1).

11. Procédé selon l'une des revendications 1 à 10,
**caractérisé en ce que** la durée d'ouverture (tö) de la vanne à carburant (18) est déterminée par le biais d'un diagramme caractéristique.

12. Procédé selon l'une des revendications 1 à 11,
**caractérisé en ce que**, dans l'état quasi stationnaire, chaque bloc (68, 69, 70, 71, 72, 73) comprend de 3 à 12, notamment de 4 à 10, de préférence 6 tours (62, 63, 64, 65, 66, 67) du vilebrequin (7).

13. Procédé selon l'une des revendications 1 à 12,
**caractérisé en ce que** la commande de la vanne à carburant (18) est différente de la commande en référence à des blocs (68, 69, 70, 71, 72, 73) successifs sans interruption de tours successifs (62, 63, 64, 65, 66, 67) du vilebrequin (7), dans lesquels la vanne à carburant (18) est ouverte et fermée exactement une fois, lorsqu'un état d'accélération ou un état de décélération est reconnu.
